# EUROPÄISCHE PATENTANMELDUNG

(11) **EP 1 882 458 A1**
(43) Veröffentlichungstag der Anmeldung: **30.01.2008**
(21) Anmeldenummer: 06015631.2
(22) Anmeldetag: 27.07.2006
(51) Int. Cl.: A61C 8/00

(54) **Dentalimplantat**

(71) Anmelder: Straumann Holding AG, 4002 Basel (CH)
(72) Erfinder: Payot, Pierre, 1204 Genéve GE (CH)
(74) Vertreter: Schaad, Balass, Menzl & Partner AG

(57) **Zusammenfassung**

Das erfindungsgemässe Dentalimplantat ist in seinem der Verankerung in einem Knochengewebe dienenden Befestigungsabschnitt (20) mit einer Abflachung (32) zur wenigstens abschnittsweisen Verjüngung seines Querschnitts ausgestattet. Nach dem Einsetzen des Dentalimplantats (10) in eine Bohrung im Kieferknochen kann der verbleibende Freiraum zwischen der Abflachung (32) und der gegenüberliegenden Wand einer Knochenlamelle mit knochenwachstumsfördernden Materialien bzw. Substanzen aufgefüllt werden, um die Knochenlamelle zu verstärken.

## Beschreibung

Die vorliegende Erfindung betrifft ein Dentalimplantat gemäss dem Oberbegriff des Anspruchs 1.

Dentalimplantate sind im Bereich der Zahnmedizin allgemein bekannte Vorrichtungen, die der Verankerung von Zahnprothesen im Kieferknochen dienen.

Ein Dentalimplantatsystem ist beispielsweise in der US 6,431,867 beschrieben. Das System weist einen im Wesentlichen zylinderförmigen Implantatkörper auf, der in einem koronal, das heisst zu einer Zahn(prothesen)krone hin auszurichtendem Abschnitt mit einer lochförmigen Ausnehmung ausgestattet ist und dessen dem koronalen Abschnitt gegenüberliegender apikaler, das heisst zur ursprünglichen Wurzelspitze hin auszurichtender Abschnitt zum Einsetzen in eine Bohrung im Kieferknochen vorbestimmt ist. Mittels einer Schraube kann die Zahnprothese im Durchgriff durch ein sogenanntes Abutment in ein Innengewinde der lochförmigen Ausnehmung eingeschraubt werden. Um eine drehrichtige Befestigung der Zahnprothese auf den Implantatkörper zu gewährleisten, greift eine V-förmige Ausnehmung des Abutments formschlüssig über entsprechend abgeschrägte, sich ausserhalb des Knochengewebes befindende Schrägflächen des koronalen Abschnitts des Implantatkörpers.

Häufig können bei Kieferknochen mit einem schmalen Querschnitt die Bohrungen in den Kieferknochen zur Aufnahme des Dentalimplantats sehr dünnwandige bukkale (wangenseitige) und/oder linguale (zungenseitige) Knochenlamellen bzw. Knochenwände hervorrufen. Wenn wiederum die Knochenlamellen sehr dünn sind, besteht die Gefahr einer Knochen- und/oder Weichgeweberezession. Derartige Knochen- und Weichgeweberückbildungen, wie auch möglicherweise Brüche der Knochenlamellen können ein Lösen bzw. Herausbrechen der Dentalimplantate zur Folge haben.

Aufgabe der vorliegenden Erfindung ist es, ein Dentalimplantat bereitzustellen, das die Gefahr von Knochen- und Weichgeweberezessionen oder gar Frakturen der einem Dentalimplantat zugeordneten Knochenlamellen vermindert und im Fall des Auftretens derartiger Rezessionen ästhetisch befriedigende Lösungen ermöglicht.

Diese Aufgabe wird durch ein Dentalimplantat gemäss dem Patentanspruch 1 gelöst. Besonders bevorzugte Ausführungsformen sind mit den in den abhängigen Ansprüchen aufgeführten Merkmalen ausgestattet.

Das erfindungsgemässe Dentalimplantat weist einen länglichen Grundkörper auf, der in Längsrichtung in einen Schulterabschnitt, einen daran anschliessenden Halsabschnitt und in Fortsetzung des Halsabschnitts in einen dem Schulterabschnitt gegenüberliegenden Befestigungsabschnitt untergliedert ist. Der Schulterabschnitt ist im in den Kieferknochen eingesetzten Zustand koronal ausgerichtet und ist vorzugsweise mit einer unter einem Winkel von beispielsweise 45° zur Längsachse des Grundkörpers abstehenden Schulter ausgestattet.

Der dem Schulterabschnitt gegenüberliegende Befestigungsabschnitt ist im eingesetzten Zustand apikal ausgerichtet und dient der Verankerung des Dentalimplantats im Knochengewebe. Der Halsabschnitt bildet einen vorzugsweise glatten Übergang zwischen dem Schulterabschnitt und dem Befestigungsabschnitt. Im in den Kieferknochen eingesetzten Zustand gelangt der Halsabschnitt in der Regel mit dem Zahnfleisch, nicht aber mit dem Knochengewebe in Kontakt.

Erfindungsgemäss ist das Dentalimplantat mit einer Abflachung im Befestigungsabschnitt ausgestattet, so dass der Querschnitt des Befestigungsabschnitts wenigstens abschnittsweise verjüngt ist.

Beim Einsetzen in eine zylindrische Bohrung im Kieferknochen wird das Dentalimplantat derart ausgerichtet, dass die Abflachung einer dünnen, zumeist bukkalen Knochenlamelle zugewandt ist, also ihr gegenüberliegt. In den entstehenden Freiraum zwischen der Knochenlamelle und der Abflachung können nach dem Einsetzen des Implantats beispielsweise Knochenmaterial, resorbierbare Knochenkeramik, synthetische Polymere oder andere das Knochenwachstum fördernde Substanzen eingebracht werden. Nach einer Heilungs- und Aufbauzeit wird die Knochenlamelle in Richtung des Freiraums wachsen und diesen ausfüllen. Dadurch verstärkt sich der Querschnitt der Knochenlamelle und das Risiko einer Knochen- und Weichgeweberezessionen wird vermindert.

Eine zusätzliche Abflachung im Halsabschnitt bietet zudem die Möglichkeit, eine Zahnprothese (Krone) aufzunehmen, deren Länge an die Weichgewebesituation angepasst werden kann.

Im Folgenden wird eine besonders bevorzugte Ausführungsform eines erfindungsgemässen Dentalimplantats detailliert an Hand einer Zeichnung beschrieben. Die Figuren zeigen rein schematisch im Einzelnen:
- Fig. 1: eine perspektivische Ansicht eines erfindungsgemässen Dentalimplantats mit einer Abflachung, die sich vom koronal auszurichtenden Schulterabschnitt über den Halsabschnitt zum apikal zu orientierenden Befestigungsabschnitt erstreckt;
- Fig. 2: in einer Seitenansicht das in Fig. 1 gezeigte Dentalimplantat, bei dem neben der bukkal zu orientierenden, in Fig. 1 sichtbaren Abflachung (kurz: bukkale Abflachung) auch eine diametral gegenüberliegende, lingual zu orientierende Abflachung (kurz: linguale Abflachung) sichtbar ist;
- Fig. 3: eine Hintersicht einer im Kieferknochen lingual zu orientierenden Seite (kurz: linguale Seite) des in Fig. 1 und Fig. 2 gezeigten Dentalimplantats;
- Fig. 4: Vorderansicht des in Fig. 1 bis Fig. 3 gezeigten Dentalimplantats;
- Fig. 5: eine Draufsicht auf das in Fig. 1 bis Fig. 4 gezeigte Dentalimplantat; und
- Fig. 6: eine Untersicht des in Fig. 1 bis Fig. 5 gezeigten Dentalimplantats.

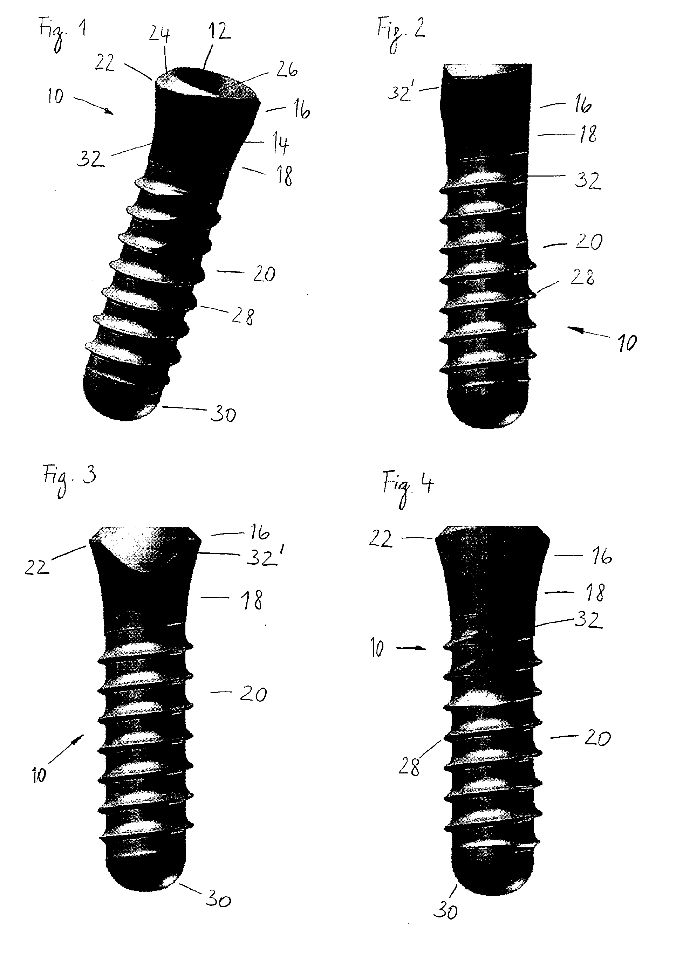

Das in den Figuren 1 bis 6 gezeigte erfindungsgemässe Dentalimplantat 10 kann als Teil eines Dentalimplantationssystems, wie beispielsweise dem im Buch "Orale Implantologie", Kapitel 7 (Andre Schroeder, Franz Sutter, Daniel Buser, Gisbert Krekeler, Thieme, 2. Auflage) beschriebenen System, eingesetzt werden und dient der Verankerung von Zahnprothesen im Kieferknochen. Das Dentalimplantat 10 weist einen einstückigen länglichen Grundkörper 12 mit einem zylinderförmigen inneren Kernbereich und einem äusseren Mantelbereich 14 auf.

Der Grundkörper 12 ist in Längsrichtung in einen frei endenden Schulterabschnitt 16, einen daran anschliessenden Halsabschnitt 18 und in Fortsetzung des Halsabschnitts 18 einen dem Schulterabschnitt 16 gegenüberliegenden Befestigungsabschnitt 20 untergliedert. Der Schulterabschnitt 16 weist eine in Umfangsrichtung wenigstens abschnittsweise von der Längsachse des Grundkörpers 12 abstehende Schulter 22 auf. Die Längsachse des Grundkörpers 12 bildet mit einer sich vom freien Ende des Grundkörpers 12 her erstreckenden oberen Schulterfläche 24 einen Winkel von vorzugsweise 45°.

Die obere Schulterfläche 24 umgibt die Öffnung einer sacklochartigen Ausnehmung 26, die im Kernbereich des Grundkörpers 12 ausgebildet ist. Vorzugsweise ist die Längsachse der sacklochartigen Ausnehmung 26 koaxial zur Längsachse des Grundkörpers 12 ausgerichtet. Die Ausnehmung 26 ist darüber hinaus mit einem Innengewinde und Aussparungen, beispielsweise einer achteckigen Aussparung, ausgestattet, um mittels einer Schraube die auf einem Abutment aufgebaute Zahnprothese und gegebenenfalls ein dazugehöriges Sekundärteil kraft- und/oder formschlüssig im Dentalimplantat 10 befestigen zu können.

Der Halsabschnitt 18 ist mit einer zur Knochenintegration bzw. Weichgewebeadhäsion geeigneten, vorzugsweise im Wesentlichen glatten Oberfläche ausgestattet, die sich kontinuierlich von der Schulter 22 bis zum Befestigungsabschnitt 20 erstreckt.

Der äussere Mantelbereich 14 weist im Befestigungsabschnitt 20 ein Aussengewinde 28 auf, das sich vom halsseitigen Beginn des Befestigungsabschnitts 20 bis zu einem halbkugelförmigen, apikal auszurichtenden Endabschnitt 30 erstreckt. Alternativ kann das Aussengewinde 28 auch nur teilweise oder mit Unterbrüchen ausgebildet, durch hervorstehende Rastnocken ersetzt oder mit einer kontinuierlich-glatten Oberfläche, wie im Fall von Schlagimplantaten, ausgeformt sein. Ebenso ist es möglich, den apikalen Endabschnitt 30 spitz zulaufend, abgeflacht oder in einer anderen Form auszubilden.

Erfindungsgemäss ist das Dentalimplantat wenigstens im Befestigungsabschnitt 20 mit einer Abflachung 32 ausgestattet, die den Querschnitt des Befestigungsabschnitts 20 wenigstens abschnittsweise verjüngt. Die Abflachung 32 ist dazu bestimmt, im in den Kieferknochen eingesetzten Zustand bukkal und damit wenigstens nahezu parallel zur vorderen Knochenlamelle ausgerichtet zu sein.

Wie besonders gut in Fig. 2 zu erkennen ist, sind im Bereich dieser bukkalen Abflachung 32 die Flanken der Gewindegänge des Aussengewindes 28 nur unvollständig ausgebildet bzw. abschnittsweise bis zum Kernbereich des Grundkörpers 12 entfernt worden. Die approximal, das heisst zu den Nachbarzähnen hin, und lingual, das heisst zungenseitig, auszurichtenden Seiten des Aussengewindes 28 sind jedoch wenigstens nahezu vollständig ausgebildet.

Fig. 2 ist weiter zu entnehmen, dass sich die bukkale Abflachung 32 vom koronalen Ende des Schulterabschnitts 16 über den Halsabschnitt 18 bis etwa über ein erstes schulterabschnittsseitiges Drittel der Längsausdehnung des Befestigungsabschnitts 20 erstreckt. Alternativ ist es natürlich auch möglich, die Abflachung 33 bis zum apikalen Endabschnitt 30 auszubilden.

Darüber hinaus kann, wie bei der gezeigten Ausführungsform, auch auf der lingualen Seite des Dentalimplantats 10 eine Abflachung 32' (kurz: linguale Abflachung 32') ausgeformt sein. Diese liegt vorzugsweise der bukkalen Abflachung 32 diametral gegenüber. Wie in Fig. 3 gezeigt, erstreckt sie sich in Längsrichtung des Grundkörpers 12 lediglich über den Schulterabschnitt 16 und weist in dieser Ansicht eine linsenartige Grundform auf. Um ein Setzen des Dentalimplantats 10 zu erleichtern, kann auch die linguale Abflachung 32' bis in den Befestigungsabschnitt 20 hinein ausgedehnt sein.

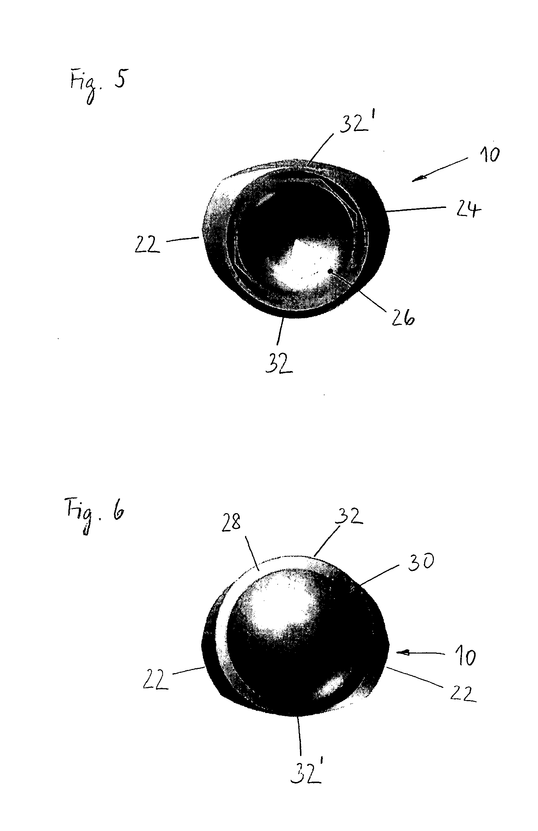

In der Vorderansicht von Fig. 4 auf die bukkale Seite des Dentalimplantats 10 ist der nahezu U- bzw. V-förmige Rand der bukkalen Abflachung 32 gut erkennbar. Der Rand bildet in dieser Ansicht näherungsweise eine parabelförmige Kurve. Die spezifische Form des Randes ergibt sich einerseits aus der radial hervorstehenden Auskragung der Schulter 32 und andererseits aus der Oberflächekrümmung der bukkalen Abflachung 32.

Die Oberfläche der Abflachung 32 kann, wie in der gezeigten Ausführungsform, zylinder- oder kegelsegmentförmig gekrümmt aber auch im Wesentlichen eben ausgebildet sein. Sie ist meistens derart ausgerichtet, dass die Längsachse mit der Oberfläche der Abflachung 32 einen vorzugsweise kleinen spitzen Winkel einschliesst, so dass sich der Querschnitt des Grundkörpers 12 im Befestigungsabschnitt 20 in Richtung zum Schulterabschnitt 16 hin verringert. Alternativ ist es natürlich auch möglich, dass die Längsachse des Grundkörpers 12 im Wesentlichen parallel zur Oberfläche der Abflachung 32 verläuft. Die beschriebenen Merkmale der bukkalen Abflachung 32 können sinngemäss auch auf die linguale Abflachung 32' übertragen werden.

In Fig. 5 ist eine Draufsicht entlang der Längsachse des Grundkörpers 12 des Dentalimplantats 10 gezeigt. Dabei wird dem Betrachter ein Blick in die Ausnehmung 26 mit dem Innengewinde und der achteckigen Aussparung gestattet. Deutlich ist zu erkennen, dass der äussere Durchmesser des Grundkörpers 12 aufgrund der sich diametral gegenüberliegenden bukkalen und lingualen Abflachung 32 32' verjüngt ist. Die Oberflächen der Abflachungen 32, 32' weisen verschiedene Krümmungsradien und, wie vorgängig bereits erwähnt, verschiedene Randformen, einerseits eine V- bzw. parabelförmige und andererseits eine linsenartige Randform, auf.

Die durch die Abflachungen 32, 32' hervorgerufenen Ränder im Schulterabschnitt 16 und/oder im Halsabschnitt 18 können der drehrichtigen Positionierung des Abutments bzw. der Zahnprothese auf dem Dentalimplantat 10 mittels Formschluss dienen.

In Fig. 6 ist eine Untersicht auf das Dentalimplantat 10 gezeigt. Der grösste Teil der Darstellung entfällt dabei auf den apikalen Endabschnitt 30, der bei dieser Betrachtung eine kreisartige Grundform aufweist. Der Endabschnitt 30 ist in dieser Ansicht von den Flanken des Aussengewindes 28 umgeben. Deutlich sind wiederum die beiden Abflachungen 32, 32' sichtbar, die zu einer Verringerung des Querschnitts an der bukkalen und lingualen Seite des Zentralimplantats 10 führen. An den approximalen Seiten steht jeweils die Schulter 22 radial nach aussen hervor.

Das Dentalimplantat 10 ist natürlich für verschiedene Ausbildungen von Kieferknochen, insbesondere im Hinblick auf verschiedene Dicken von Knochenlamellen und unterschiedliche Stellungen von Nachbarzähnen, individualisierbar. Das heisst, die Form, Position, Ausdehnung und die Oberflächenbeschaffenheit der Abflachungen 32, 32' kann den spezifischen Bedürfnissen angepasst werden.

Aufgrund der verschiedensten Materialen, die zur Herstellung des Dentalimplantats 10 verwendet werden können, beispielsweise Titan, Goldlegierungen, Kunststoff, Keramik usw., sind ebenso verschiedene Verfahren zur Ausformung der Abflachungen 32, 32' einsetzbar. So können die vorzugsweise rotationssymmetrischen Halbzeuge des Dentalimplantats 10 beispielsweise durch Schleifen, Fräsen oder Erodieren mit Abflachungen 32, 32' versehen werden. Natürlich ist es auch möglich, das Dentalimplantat 10 in einem Giessprozess direkt mit Abflachungen 32, 32' ausgestattet herzustellen.

Darüber hinaus können die Oberflächen der Abflachungen 32, beispielsweise durch Sandstrahlen, Ätzen, Beschichten usw. funktionell modifiziert werden, um eine möglichst stabile Verankerung im Knochen- und Weichgewebe, beispielsweise durch Förderung des Zellwachstums, zu bewirken.

Beim Einsetzen des Dentalimplantats 10 in die im Allgemeinen zylinderförmige Bohrung im Kieferknochen durch Einschrauben oder Einschlagen ist die Orientierung des Dentalimplantats 10 mit der bzw. den Abflachungen 32, 32' zu beachten. Hilfsweise kann dazu beispielsweise das Dentalimplantat 10 selbst oder ein am Dentalimplantat 10 befestigtes Übertragungsteil entsprechend markiert sein.

Nach einem korrekten Einsetzen in die Bohrung des Kieferknochens werden in den verbleibenden Freiraum zwischen der bukkalen Abflachung 32 und der gegenüberliegenden Wand der Knochenlamelle beispielsweise Knochenmaterialien, resorbierbare Keramikelemente, synthetische Polymerkügelchen oder das Knochenwachstum fördernde Substanzen zur Verstärkung der Knochenlamelle eingebracht.

## Patentansprüche

1. Dentalimplantat mit einem länglichen Grundkörper (12), der in Längsrichtung einen Schulterabschnitt (16), einen daran anschliessenden Halsabschnitt (18) und in Fortsetzung des Halsabschnitts (18) einen dem Schulterabschnitt (16) gegenüberliegenden Befestigungsabschnitt (20) zur Verankerung des Dentalimplantats (10) in einem Knochengewebe aufweist, **dadurch gekennzeichnet, dass** der Befestigungsabschnitt (20) mit einer Abflachung (32) zur wenigstens abschnittsweisen Verjüngung seines Querschnitts ausgestattet ist.

2. Dentalimplantat nach Anspruch 1, **dadurch gekennzeichnet, dass** der Grundkörper (12) einen inneren Kernbereich und einen äusseren Mantelbereich (14), der im Befestigungsabschnitt (20) mit einem Aussengewinde (28) ausgestattet ist, aufweist, und dass in der Abflachung (32) Flanken der Gewindegänge des Aussengewindes (28) unvollständig ausgebildet sind.

3. Dentalimplantat nach Anspruch 1 oder 2, **dadurch gekennzeichnet, dass** sich die Abflachung (32) auch über den Schulterabschnitt (16) und/oder den Halsabschnitt (18) erstreckt.

4. Dentalimplantat nach einem der Ansprüche 1 bis 3, **dadurch gekennzeichnet, dass** durch die Abflachung (32) der Querschnitt des Grundkörpers (12) asymmetrisch bezüglich der Längsachse verjüngt wird.

5. Dentalimplantat nach einem der Ansprüche 1 bis 4, **dadurch gekennzeichnet, dass** der Grundkörper (12) zwei, sich vorzugsweise diametral gegenüberliegende Abflachungen (32) aufweist, die vorbestimmt sind, im Knochengewebe jeweils bukkal bzw. lingual ausgerichtet zu werden.

6. Dentalimplantat nach einem der Ansprüche 1 bis 5, **dadurch gekennzeichnet, dass** die Oberfläche der Abflachung (32) im Wesentlichen eben, zylindersegmentförmig oder kegelmantelsegmentförmig ausgebildet ist.

7. Dentalimplantat nach einem der Ansprüche 1 bis 6, **dadurch gekennzeichnet, dass** die Längsachse des Grundkörpers (12) wenigstens nahezu parallel zur Oberfläche der Abflachung (32) verläuft.

8. Dentalimplantat nach einem der Ansprüche 1 bis 7, **dadurch gekennzeichnet, dass** die Abflachung (32) eine durch Sandstrahlung, Ätzung und/oder Beschichtung wenigstens abschnittsweise konditionierte Oberfläche aufweist.
